# EUROPÄISCHE PATENTSCHRIFT

(11) **EP 2 433 900 B1**
(45) Veröffentlichungstag und Bekanntmachung des Hinweises auf die Patenterteilung: **20.04.2016**
(21) Anmeldenummer: 11179176.0
(22) Anmeldetag: 29.08.2011
(51) Int. Cl.: B67C 3/20

(54) **Befüllvorrichtung**
Filling device
Dispositif de remplissage

(30) Priorität: 24.09.2010 DE 102010041351
(43) Veröffentlichungstag der Anmeldung: 28.03.2012
(73) Patentinhaber: Krones AG, 93073 Neutraubling (DE)
(72) Erfinder: Sobiech, Bernd, 93049 Regensburg (DE)
(74) Vertreter: Grünecker Patent- und Rechtsanwälte PartG mbB

(56) Entgegenhaltungen:
- EP-A2- 2 194 020
- DE-B3-102009 011 949

## Beschreibung

Die Erfindung bezieht sich auf eine Befüllvorrichtung für Behälter, insbesondere für Getränkebehälter, der im Oberbegriff von Anspruch 1 erläuterten Art.

Eine derartige Befüllvorrichtung ist aus der EP 1 025 424 bekannt. Die bekannte Befüllvorrichtung enthält eines der üblichen Befüllerkarussells, die um eine im Wesentlichen senkrechte Achse umlaufen und an ihrem äußeren Umfang mit radial vorstehenden Halterungen für die Behälter versehen sind. Die Halterungen sind üblicherweise zangenartig ausgebildet, wobei die beiden Zangenbacken federbelastet zueinander gezogen werden und eine an den Behälter angepasste Ausnehmung aufweisen, mit denen die Halterung den Behälter zum Befüllen umgreift. Normalerweise werden Flaschen befüllt, die unterhalb der Befüllöffnung, an ihrem Hals, mit einem vorstehenden Flansch versehen sind, der eine Auflage auf die Oberseite der Halterung bietet. Zum Befüllen ist ein Füllventil vorgesehen, das mit seinem Auslauf in der Befüllstellung in koaxialer Ausrichtung mit der Befüllöffnung des Behälters steht. Durch Betätigen des Füllventils wird eine vorbestimmte Menge des Produkts in den Behälter eingefüllt. Um den Befüllzustand zu kontrollieren, wird der Behälter gewogen. Zu diesem Zweck ist eine Wiegeeinrichtung vorgesehen, die ein elastisch verformbares Element in Form eines starr am Gestell befestigten elastischen Stabes enthält, dessen Verformung durch das Gewicht des Behälters festgestellt und als Maß für das Gewicht gewertet wird. Das elastische Element wird durch die Halterung beaufschlagt, wobei das elastische Element und die Halterung in Radialrichtung bezüglich der Drehachse des Befüllerkarussells nebeneinander liegen. Dabei dient die Halterung als Hebelarm zur Einwirkung auf den elastisch verformbaren Stab. Durch diese waagerecht und radial verlaufende Anordnung ist die bekannte Wiegevorrichtung jedoch relativ empfindlich gegen betriebsbedingte Schwingungen, die sich durch die Rotation des Befüllerkarussells oder durch auf die Behälter kurzzeitig einwirkenden Kräfte oder dgl. ergibt. Diese Schwingungen können das Wiegeergebnis verfälschen.

In JP-2005126077 ist der Gewichtssensor seitlich oberhalb des Füllventilauslaufs auf einem Träger für das Füllventil angeordnet. Die Durchführung für das Trägerorgan für die Flasche ist bezüglich des Füllventilauslaufs radial nach innen versetzt, mit einem Faltenbalg abgedichtet und sehr komplex aufgebaut. Üblicherweise ist gerade im radial innen liegenden Bereich des Karussells sehr wenig freier Platz. Einbauten sollten weitgehend vermieden werden. Die komplexe Flaschenhalterung liegt im Spritzbereich des Produktes. Dort angesiedelte eventuell weitere Funktionseinheiten könnten durch Produktspritzer in ihrer Funktion beeinträchtigt werden.

Bei einer Anwendung für kaltaseptische Abfüllung muss dieser Bereich zur Reinigung und Desinfektion mit aggressiven Medien beaufschlagt werden. Diese könnten ebenso Funktionsbeeinträchtigungen hervorrufen. Weiterhin entstehen in solchen Einbauten konstruktive Hinterschneidungen, in denen keine sichere Reinigung und Desinfektion möglich ist oder zumindest erschwert wird.
Weiterhin ist eine Wartung und Instandhaltung von Maschinenkomponenten innerhalb des Karussells durch die verminderte Zugänglichkeit erschwert.
Die JP-2005231664 zeigt ein Füllorgan mit Wägeeinrichtung. Auch hier wird die Flasche von der Wägeeinrichtung seitlich auskragend unter dem Füllventilauslauf zentriert. Hier wird allerdings die Kraftübertragung vom Trägerorgan auf die Wägeeinrichtung sehr komplex gestaltet, wobei das zu den Einbauten unter JP-2005126077 Geschriebene gilt.

Die EP 2 194 020 A2 offenbart eine Befüllvorrichtung, wobei die Befüllung des Behälters durch die Wiegevorrichtung hindurch erfolgt, d.h. die Wiegevorrichtung erstreckt sich kreisförmig geschlossen um die Befüllachse herum.

Der Erfindung liegt die Aufgabe zugrunde, eine Befüllvorrichtung mit einer robusten, zuverlässigen Wiegevorrichtung bereitzustellen.
Die Aufgabe wird durch die im Anspruch 1 angegebenen Merkmale gelöst.
Durch die erfindungsgemäße Anordnung der Wiegevorrichtung zumindest teilweise vertikal oberhalb der Abgabeöffnung des Füllventils ist eine gegen Schwingungen in Richtung der Schwerkraft im Wesentlichen geschützte Verbindung zwischen dem Behälter und der Wiegevorrichtung möglich.
Zweckmäßigerweise ist die Halterung direkt mit der Wiegevorrichtung über wenigstens einen im Wesentlichen senkrecht verlaufenden Arm verbunden.
Einen noch besseren Schutz gegen unerwünschte Schwingungen bietet eine im Wesentlichen symmetrisch zur Befüllachse angeordnete Wiegevorrichtung, wobei die Verbindung zwischen Wiegevorrichtung und Behälterhalterung an zwei einander gegenüber liegenden Seiten der Befüllachse vorgesehen ist.
Das Tragorgan wird bevorzugt durch einen Teil des Rahmens hindurchgeführt, sodass es zusätzlich gegen versehentliche Berührungen und dadurch erzeugte Schwingungen geschützt ist. Die Durchführungsöffnung des Tragorgans durch den Rahmen wird bevorzugt ein- und/oder beidseitig abgedichtet, sodass keine Produktspritzer die Wiegevorrichtung und/oder keine Verunreinigungen von oberhalb des Rahmens in den zu befüllenden Behälter gelangen können.

Für einen verbesserten Schutz gegen Schwingungen kann das Tragorgan auch in einem Lager aufgenommen werden, was insbesondere reibfrei erfolgen sollte, sodass die vertikale Messbewegung des Tragorgans nicht durch Reibungskräfte beeinträchtigt wird. Eine reibfreie Lagerung erfolgt bevorzugt in Form eines Magnetlagers, wobei die Lagereinrichtungen austauschbar befestigt sein können.

Die Befüllung der Behälter erfolgt durch eine in einem Freiraum im Tragorgan angeordnete Abgabeöffnung des Füllventils, da hierbei eine symmetrische und im Wesentlichen vertikal übereinanderliegende Anordnung der Wiegeeinrichtung und des Behälters erleichtert wird. Bevorzugt enthält das Tragorgan zwei gegenüber liegende Arme, zwischen denen die Abgabeöffnung und ihre Versorgungsleitung untergebracht werden.

Die Versorgungsleitung wird bevorzugt direkt durch den Rahmen hindurch geführt, entweder direkt durch eine in den Rahmen eingeformte Leitung oder durch eine in einem Hohlraum im Rahmen untergebrachte Leitung.

Die Abgabeöffnung ist bevorzugt verschließbar, sodass der produktberührte Bereich der Befüllanlage hygienisch einwandfrei und automatisch gereinigt werden kann, ohne dass die Gefahr besteht, dass die Wiegeeinrichtung durch Nässe oder möglicherweise aggressive Reinigungsmittel Schaden nimmt.

Ausführungsbeispiele der Erfindung werden nachfolgend anhand der Zeichnungen näher erläutert. Es zeigen:
- Fig. 1: eine perspektivische Darstellung eines Teils einer erfindungsgemäßen Befüllvorrichtung,
- Fig. 2: die Seitenansicht eines Teils einer erfindungsgemäßen Befüllvorrichtung,
- Fig. 3: die Draufsicht auf eine erfindungsgemäße Befüllvorrichtung,
- Fig. 4: die Seitenansicht einer erfindungsgemäßen Befüllvorrichtung,
- Fig. 5: ein Teil einesTragorganes für eine erfindungsgemäße Befüllvorrichtung,
- Fig. 6: eine Seitenansicht eines weiteren Ausführungsbeispiels einer erfindungsgemäßen Befüllvorrichtung,
- Fig. 7: eine Seitenansicht eines weiteren Ausführungsbeispiels einer erfindungsgemäßen Befüllvorrichtung,
- Fig. 8: eine Vorderansicht eines Teils eines Tragorgans einer erfindungsgemäßen Befüllvorrichtung,
- Fig. 9: ein weiteres Ausführungsbeispiel eines Tragorgans einer erfindungsgemäßen Befüllvorrichtung in Seitenansicht,
- Fig. 10: ein weiteres Ausführungsbeispiel eines Tragorgans einer erfindungsgemäßen Befüllvorrichtung, und
- Fig. 11: eine Draufsicht auf eine Lagerung eines Tragorgans.

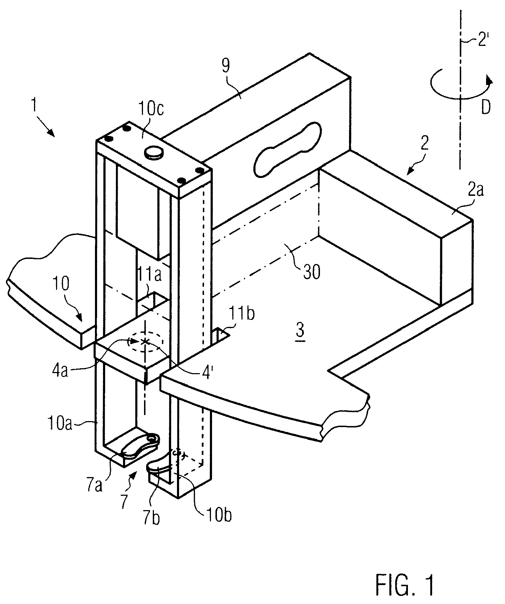

Fig. 1 zeigt in perspektivischer Darstellung eine Befüllvorrichtung 1 als Teil einer Abfüllanlage zum Abfüllen von Getränken, die beispielsweise ein herkömmliches Befüllerkarussell ist. Die Abfüllanlage enthält einen Rahmen 2 der um eine im Wesentlichen vertikale Drehachse 2' in Drehrichtung D rotierend angetrieben wird. Im dargestellten Ausführungsbeispiel ist vom Rahmen 2 lediglich ein Teil eines sich um die Drehachse 2' erstreckenden, äußeren Tragteils 2a ersichtlich, an dem rund um die Drehachse 2' verteilt eine Vielzahl im Wesentlichen identischer Befüllvorrichtung 1 montiert sind.

Am Tragteil 2a ist ein Träger 3 angeordnet, der sich in Radialrichtung bezüglich der Drehachse 2' über das Tragteil 2a hinaus erstreckt. Dieser Träger 3 ist als Ventilaufnahme für ein Füllventil 4 ausgebildet. Das Füllventil 4 ist üblicher Art und über eine Zufuhrleitung 5 und über Absperrorgane 6 mit einer Quelle für zu befüllendes Produkt, insbesondere einen Getränkevorrat, verbunden. Das Füllventil 4 ist so angeordnet, dass seine Abgabeöffnung 4a mit im Wesentlichen senkrechter Mittellinie 4' und im Wesentlichen horizontaler Ausrichtung angeordnet ist.

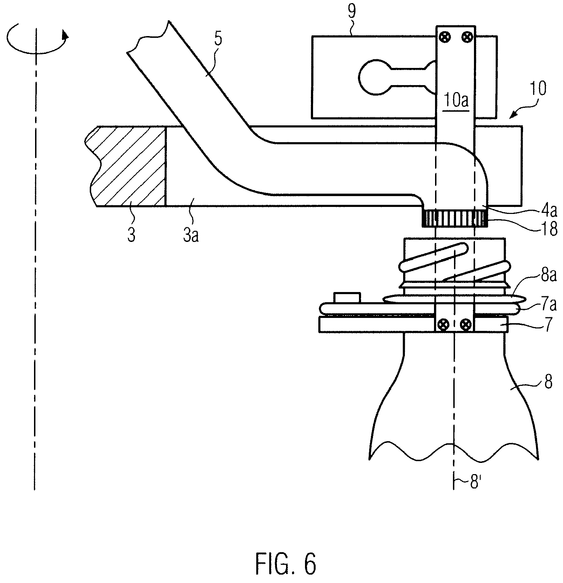

Vertikal unterhalb der Abgabeöffnung 4a ist eine Halterung 7 für zu befüllende Behälter 8 (Fig. 6), dargestellt sind Flaschen mit einem am Hals vorgesehenen Handhabungsflansch 8a und einer Behältermittellinie 8', angeordnet. Die Halterung 7 enthält, wie üblich, als Zange ausgebildete, seitliche Backen 7a bzw. 7b, die eine an den Behälter angepasste Aufnahmeöffnung und eine obere Auflagefläche für den Handhabungsflansch 8a aufweisen und über eine nicht dargestellte Feder oder Magnete in ihrer Schließstellung belastet sind. Die Feder- bzw. Magnetkraft ist derart ausgebildet, dass sich die Backen 7a, 7b voneinander wegbewegen, wenn ein Behälter 8 in Radialrichtung bezüglich der Drehachse 2' einwärts gegen die Backen drückt, und sich wieder in die Schließstellung zueinander bewegen, sobald der Behälter 8 in der Ausnehmung der Backen angekommen ist. Dadurch bewegen sich die Backen 7a, 7b unter den Handhabungsflansch 8a und halten den Behälter 8 zum Befüllen frei hängend in einer im Wesentlichen axialen Ausrichtung der Behälterachse 8' zur Befüllachse 4' fest.

Im dargestellten Ausführungsbeispiel sind die Backen 7a, 7b der Halterung 7 an einer Wiegeeinrichtung 9 befestigt. Als Wiegeeinrichtung kann jede Konstruktion verwendet werden, die in der Lage ist, ein daran frei aufgehängtes Gewicht festzustellen. Die Wiegeeinrichtung ist bevorzugt eine Wägezelle mit elastischem Stab (mit Dehnungsmessstreifen) kann jedoch auch eine Wägeeinrichtung vom Typ Parallelogramm oder entsprechend sensible Druckaufnehmer, wie Piezo-Systeme, sein.

Durch die Wiegeeinrichtung werden gewichtsabhängige Signale an eine Steuereinrichtung (nicht gezeigt) für das jeweils zugeordnete Füllventil 4 ausgegeben. Diese Steuereinrichtung ist bevorzugt eine Master-Slave-Steuerung mit untergeordneten Steuereinheiten für jeweils mindestens ein Füllventil und einer übergeordneten Steuerung, an der auch vom Bediener verschiedene Parameter, die für den Füllprozess spezifisch sind, eingegeben werden.

Die Wiegevorrichtung befindet sich zumindest mit einem Teil senkrecht oberhalb der Abgabeöffnung 4a des Füllventils 4, das heißt sie wird von der Befüllachse 4' durchsetzt, und ist somit durch die Montagestruktur, das heißt den Träger 3, gegen Produktspritzer aus der Abgabeöffnung 4a geschützt. Je nach Gestalt der Wiegevorrichtung 9 ist diese vollständig symmetrisch zur Befüllachse 4' oder, wie die Figuren zeigen, nur in Drehrichtung D symmetrisch beidseitig der Befüllachse 4' angeordnet, und erstreckt sich von der Befüllachse 4' in radialer Richtung einwärts in Richtung auf die Drehachse 2'.

Die Halterung 7 ist zu diesem Zweck mit Hilfe eines Tragorgans 10 direkt an der Wiegevorrichtung 9 abgehängt. Das Tragorgan 10 enthält wenigstens einen, im bevorzugten Ausführungsbeispiel zwei Arme 10a, 10b, von denen jeder einen der Backen 7a, 7b trägt. Die Arme 10a, 10b verlaufen parallel zueinander und erstrecken sich im Wesentlichen vertikal, wobei im dargestellten Ausführungsbeispiel durch ein Joch 10c Abmessungsunterschiede zwischen der Breite der Wiegevorrichtung 9 und der Breite der Halterung 7 ausgeglichen werden, sodass ein strikt senkrechter Verlauf der Arme 10a, 10b sichergestellt ist. Das Tragorgan 10 kann ggf. selbstausrichtend sein, d. h. derart schwenkbar befestigt sein, dass es sich unter Einwirkung der Schwerkraft in seiner optimalen Lage senkrecht unter der Wiegevorrichtung 9 häit. Die vertikale Höhe des Tragorgans 10 sollte so gering wie möglich sein, um den Abstand zwischen der Behältermündung und der Wiegevorrichtung so gering wie möglich zu halten, d. h. die Halterung 7 der Wiegevorrichtung 9 möglichst ortsnah zuzuordnen.

Die Wiegevorrichtung 9 ist mit dem Rahmen 2 verbunden, was im Falle der Ausbildung der Wiegevorrichtung 9 als elastischer Stab, an dem der Befestigung des Tragorgans 10 gegenüberliegenden Ende erfolgt. Dabei ist der oder die Arme 10a, 10b die einzige Befestigung der Halterung 7 und somit des Behälters 8 am Rahmen 2. Die Arme 10a, 10b greifen symmetrisch bezüglich der Befüllachse 4' und im gleichen Abstand zur Befüllachse 4' an der Wiegevorrichtung 9 an, wobei der Abstand zur Befüllachse 4' so klein gehalten ist, wie es der Halsdurchmesser des Behälters 8 gestattet, um einen Hebelwirkung zu minimieren bzw. zu vermeiden. Die Arme 10a, 10b befinden sich an der in Drehrichtung D vor- bzw. nachlaufenden Seite der Wiegevorrichtung 9.

Das Tragorgan 10 wird durch die Montagestruktur der Abgabeöffnung 4a des Füllventils 4, im dargestellten Ausführungsbeispiel den Ventilträger 3, hindurchgeführt, wobei zu diesem Zweck Öffnungen 11 a bzw. 11 b im Träger 3 vorgesehen sind. Im dargestellten Ausführungsbeispiel sind die Öffnungen 11 a, 11 b als parallele und umfangsseitig offene Schlitze ausgebildet, sodass das Tragorgan 10 einfach montiert werden kann. Die Abmessungen der Schlitze 11a, 11b sind allseitig größer als die Abmessungen der Arme 10a, 10b, die sich durch die jeweilige Öffnung 11a, 11b erstrecken, sodass die Wiegeergebnisse nicht durch eine versehentliche Reibung der Arme 10a, 10b am Träger 3 verfälscht werden.

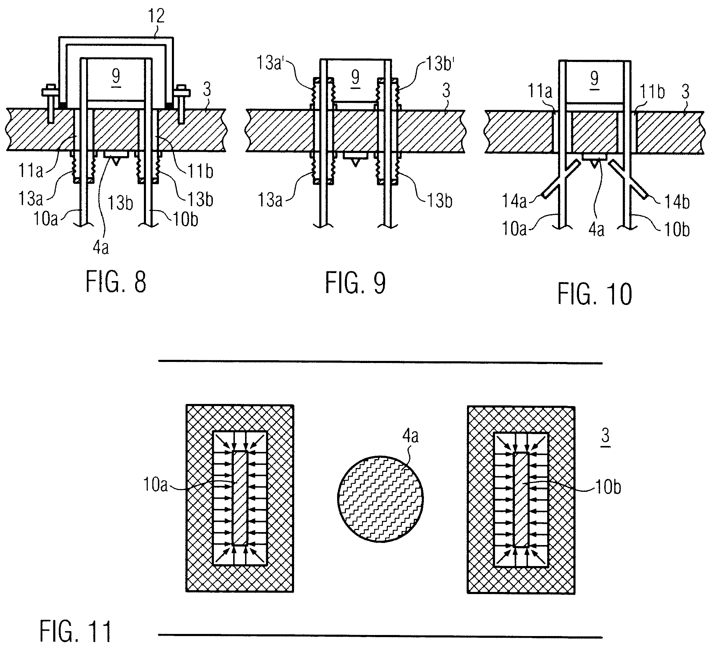

Wenn der Träger 3 als Spritzschutz gegen Produktspritzer oder als Schutz beim Reinigen für die Wiegevorrichtung 9 nicht ausreicht (z. B. bei ESL(extended shelf life)-Anlagen oder bei kaltaseptischer Abfüllung), können die Öffnungen 11a, 11b nach einer oder nach beiden Seiten in axialer Richtung abgedichtet werden wie dies beispielsweise in den Figuren 8-10 ersichtlich ist. Die Abdichtung kann beispielsweise, wie Fig. 8 zeigt, durch ein über die Wiegevorrichtung 9 und den über den Träger 3 vorstehenden Teil des Tragorgans 10 gestülptes Gehäuse 12 erfolgen, das am Träger 3 in geeigneter Weise lösbar unter Einsatz von Dichtungsmitteln befestigt ist. Nach unten hin kann die Abdichtung beispielsweise durch jeweils einen Faltenbalg 13a, 13b vorgenommen werden, die jeweils rund um die zugeordnete Öffnung 11 a bzw. 11 b und den zugeordneten Arm 10a bzw. 10b befestigt sind. Die Abdichtung kann auch durch jeweils einen oberhalb und einen unterhalb des Trägers 3 angeordneten Faltenbalg 13a bzw. 13'a und 13b bzw. 13'b vorgenommen werden. Die einfachste Art einer Abdichtung zeigt Fig. 10, wobei am jeweiligen Arm 10, 10b unterhalb des Trägers 3 jeweils ein Abweisschirm 14a bzw. 14b befestigt ist, der jeweils von der Abgabeöffnung 4a nach außen geneigt ist und über den jeweiligen Arm 10a, 10b allseitig vorsteht. Auf diese Weise wird verhindert, dass Produktspritzer durch die Öffnungen 11 a, 11 b die Wiegevorrichtung 9 erreichen bzw. Verunreinigungen von oberhalb des Trägers 3 durch die Öffnungen 11a, 11b in den Behälter fallen. Eine Beeinträchtigung des Wiegevorganges durch die Starrheit eines Faltenbalges wird dabei vermieden.

Die Ausgestaltungen nach den Figuren 8 und 9 lassen eine Reinigung auch des Außenbereichs der Befülleinrichtung zu, ohne dass Reinigungsmedien durch die Öffnungen 11 a, 11 b laufen können.

Innerhalb der Öffnungen 11a, 11b können gegebenenfalls Lagerkonstruktionen eingebaut werden, die das Tragorgan 10 radial und seitlich abstützen ohne diese in der vertikalen Messbewegung durch Reibungskräfte zu beeinträchtigen. Ein besonders vorteilhaftes Lager ist ein Magnetlager, wie es beispielsweise in Fig. 11 gezeigt ist. Wenigstens ein Teil des jeweiligen Arms 10a und/oder 10b wird aus magnetischem oder magnetisierbarem Material gefertigt. Rings um die Öffnung 11 a und/oder 11 b werden Dauer- oder Elektromagneten angebracht, wodurch der jeweilige Arm 10a, 10b sowohl radial (Fliehkräfte) als auch tangential (Anfahr-/Bremsbeschleunigung der Abfüllanlage) reibungsfrei eingesperrt wird.

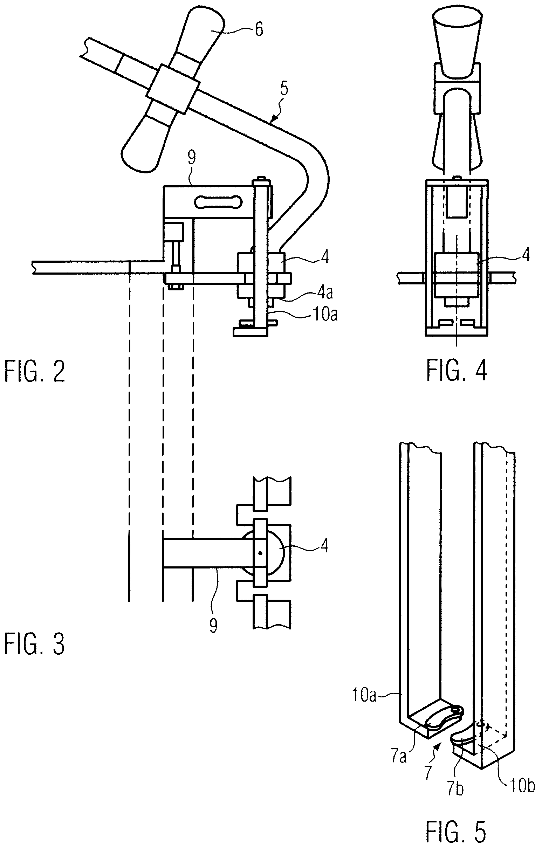

Das Tragorgan 10 ist so ausgebildet, dass es einen Freiraum zum Aufnehmen des Füllventils 4 und/oder seiner Abgabeöffnung 4a sowie seiner Versorgungsleitung 5 bietet. Die Versorgungsleitung 5 kann beispielsweise, wie Fig. 2 zeigt, in Form einer festen Leitung über die Wiegevorrichtung 9 hinweg und von radial außen zwischen die parallelen Arme 10a, 10b geführt werden, um das mittig zwischen den Armen 10a, 10b liegende Füllventil 4 und/oder dessen Abgabeöffnung 4a zu erreichen.

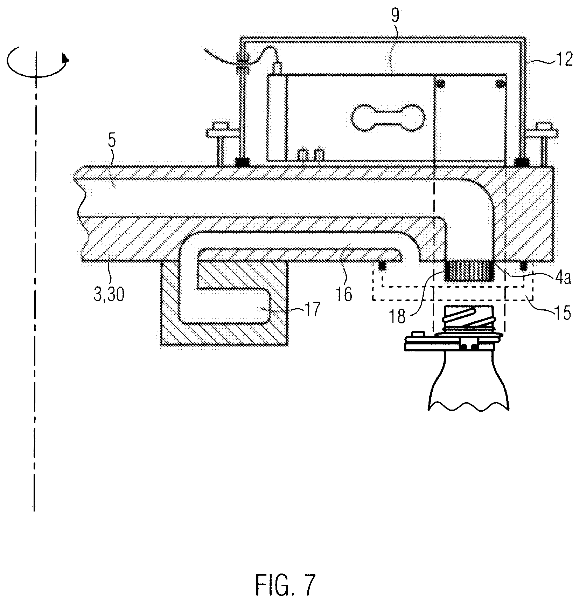

Die Versorgungsleitung 5 kann auch, wie Fig. 6 zeigt, als Schlauch oder feste Leitung durch einen im Träger 3 verlaufenden Hohlraum 3a zwischen die Arme 10a, 10b des Tragorgans 10 geführt werden. Schließlich kann die Versorgungsleitung, wie Fig. 7 zeigt, direkt in den Rahmen oder, wie dargestellt, den Träger 3 eingearbeitet werden.

In allen Ausführungsbeispielen kann die Abgabeöffnung 4a des Füllventils 4 durch eine Schutzkappe (CIP-Kappe bzw. Dummy-Flasche) 15 verschlossen werden, die automatisch oder manuell einzusetzen ist, um eine automatische Reinigung der Füllmaschine durchzuführen. Dazu ist in bekannter Weise eine Rücklaufleitung 16 in einen Rücklaufkanal 17 vorgesehen, die neben der Abgabeöffnung 4a mündet und mittels der Schutzkappe 15 mit der Produktleitung 5 kurzgeschlossen wird.

Das Tragorgan 10 sollte so ausgebildet werden, dass die Länge der Arme 10a, 10b so klein wie möglich gehalten wird. Dies bedeutet, dass oberhalb des Trägers 3 ein möglichst geringer Überstand ermöglicht wird, was durch die Ausgestaltung der Figuren 6 und 7, bei dem die Wiegevorrichtung 9 direkt auf dem Träger 3 oder, einen gegebenenfalls vorgesehenen Adapter 30 (Fig. 1) sitzt, optimal verwirklicht wird. Unterhalb des Trägers 3 bzw. des Adapters 30 sollte möglichst nur so viel Platz bleiben, wie unbedingt erforderlich, das heißt es muss der Behälter oberhalb des Halsflansches 8a, gegebenenfalls die über den Träger bzw. Adapter vorstehende Abgabeöffnung 4a, gegebenenfalls die Schutzkappe 15 und gegebenenfalls eine Gassperre 18 (Figuren 6 und 7) untergebracht werden, durch die ein Nachtropfen des Produkts aus der Abgabeöffnung 4a vermieden wird, wenn das Füllventil 4 von der Abgabeöffnung 4a (Fig. 2) räumlich getrennt untergebracht ist. In der Ausgestaltung nach Fig. 7 ist die Schutzkappe 15 so ausgebildet, dass auch die Gassperre 18 mitgereinigt werden kann.

Die erfindungsgemäße Befüllvorrichtung ist für die unterschiedlichsten Befüllanlagen geeignet. Diese können, wie im Ausführungsbeispiel dargestellt, Teil einer Abfüllanlage mit kontinuierlich arbeitenden Rundläufermaschinen sein. Selbstverständlich ist der Einsatz in getakteten Maschinen ebenso denkbar. Insbesondere ist die Tatsache, dass das Tragorgan durch Rahmen- oder Trägerteile hindurchgeführt wird, bei kalt-aseptischen Abfüllanlagen oder bei ESL-Anlagen (ESL = extended shelf life) vorteilhaft, wobei hier besonders die Ausführung mit den Faltenbalg-Abdichtungen mit oder ohne Gehäuse, eingesetzt wird.

Normalerweise wird das Produkt von einem oben auf dem Karussell installierten Produkttank über einzelne Produktleitungen zu den jeweiligen Füllventilen geliefert. Eine direkte Zuleitung von einem Mediendrehverteiler ist ebenfalls möglich. Dabei steht der Produktvorlaufbehälter dann bevorzugt nahe neben der Füllmaschine. Die Zuleitung erfolgt dabei von oben in das Füllventilgehäuse. Bevorzugt lässt sich das durchführen, wenn das Produktventil (auch als Doppelventil zur Erzeugung verschiedener Füllgeschwindigkeiten) nicht oberhalb der Produktabgabeöffnung sondern direkt in der Produktleitung installiert ist, wobei am Füllventilauslauf die Gassperre 18 eingebaut ist, um ein Tropfen des Produktes aus der Abgabeöffnung 4a zu vermeiden.

Die Zuleitung des Produktes kann dabei, wie Fig. 2 zeigt, um die Wägezelle herumgeführt werden, bevorzugt wird die Zuleitung jedoch auf dem kürzesten Weg vom Produktkessel/Mediendrehverteiler direkt unter die Wägezelle geführt.

In Abwandlung der beschriebenen und gezeichneten Ausführungsbeispiele kann das Trägerorgan auch nur einen einzigen Arm enthalten oder beispielsweise als geschlitztes Rohr oder dgl. ausgebildet sein. Außer für Getränke ist die erfindungsgemäße Befülleinrichtung auch für partikelförmige Güter, wie Pulver oder Granulate, brauchbar.

## Patentansprüche

1. Befüllvorrichtung (1) für Behälter (8), insbesondere für Getränkeflaschen, mit einem Füllventil (4) mit Abgabeöffnung (4a), einer Halterung (7) zum Halten des Behälters (8) in hängender Anordnung, sowie einer Wiegevorrichtung (9) zum Wiegen des hängenden Behälters (8), **dadurch gekennzeichnet, dass** zumindest ein Teil der Wiegevorrichtung (9) vertikal oberhalb der Abgabeöffnung (4a) angeordnet ist.

2. Befüllvorrichtung nach Anspruch 1, **dadurch gekennzeichnet, dass** die Halterung (7) über ein im Wesentlichen vertikal verlaufendes Tragorgan (10) mit der Wiegevorrichtung (9) verbunden ist.

3. Befüllvorrichtung nach einem der Ansprüche 1 oder 2, **dadurch gekennzeichnet, dass** die Wiegevorrichtung (9) an zwei gegenüberliegenden Seiten und symmetrisch zur Befüllachse (4') angeordnet ist.

4. Befüllvorrichtung nach Anspruch 2 oder 3, **dadurch gekennzeichnet, dass** das Tragorgan (10) durch ein Rahmenteil (2a, 3) hindurchgeführt ist.

5. Befüllvorrichtung nach Anspruch 4, **dadurch gekennzeichnet, dass** die Durchführung (11 a, 11 b) des Tragorgans (10) ein- und/oder beidseitig abgedichtet ist.

6. Befüllvorrichtung nach einem der Ansprüche 2 bis 5, **dadurch gekennzeichnet, dass** das Tragorgan (10) reibfrei gelagert ist, insbesondere durch ein Magnetlager.

7. Befüllvorrichtung nach einem der Ansprüche 2 bis 6, **dadurch gekennzeichnet, dass** das Tragorgan (10) einen Freiraum für die Abgabeöffnung (4a) und ihrer Versorgungsleitung (5) definiert.

8. Befüllvorrichtung nach Anspruch 7, **dadurch gekennzeichnet, dass** die Abgabeöffnung (4a) und die Versorgungsleitung (5) zwischen zwei gegenüberliegenden Armen (10a, 10b) des Tragorgans (10) angeordnet ist.

9. Befüllvorrichtung nach einem der Ansprüche 1 bis 8, **dadurch gekennzeichnet, dass** eine Versorgungsleitung (5) für die Abgabeöffnung (4a) durch ein Rahmenteil (3, 30) geführt ist.

10. Befüllvorrichtung nach einem der Ansprüche 1 bis 9, **dadurch gekennzeichnet, dass** die Abgabeöffnung (4a) verschließbar ist.

## Claims

1. Filling device (1) for containers (8), especially for beverage bottles, comprising a filling valve (4) with a discharge opening (4a), a holder (7) for holding the container (8) in a suspended arrangement, as well as a weighing device (9) for weighing the suspended container (8), **characterized in that** at least one portion of the weighing device (9) is arranged vertically above the discharge opening (4a).

2. Filling device according to claim 1, **characterized in that** the holder (7) is connected to the weighing device (9) by a substantially vertically extending carrier member (10).

3. Filling device according to one of claims 1 or 2, **characterized in that** the weighing device (9) is arranged on two opposing sides and symmetrically with respect to the filling axis (4').

4. Filling device according to claim 2 or 3, **characterized in that** the carrier member (10) is led through a frame part (2a, 3).

5. Filling device according to claim 4, **characterized in that** the lead-through aperture (11 a, 11 b) for the carrier member (10) is sealed on one and/or both sides.

6. Filling device according to one of claims 2 to 5, **characterized in that** the carrier member (10) is mounted in a frictionless manner, especially by a magnetic bearing.

7. Filling device according to one of claims 2 to 6, **characterized in that** the carrier member (10) defines a free space for the discharge opening (4a) and its supply line (5).

8. Filling device according to claim 7, **characterized in that** the discharge opening (4a) and the supply line (5) are arranged between two opposite arms (10a, 10b) of the carrier member (10).

9. Filling device according to one of claims 1 to 8, **characterized in that** a supply line (5) for the discharge opening (4a) is led through a frame part (3, 30).

10. Filling device according to one of claims 1 to 9, **characterized in that** the discharge opening (4a) is closable.

## Revendications

1. Dispositif de remplissage (1) pour récipients ou contenants (8), notamment des bouteilles de boissons, comprenant une vanne de remplissage (4) avec une ouverture de distribution (4a), un support de maintien (7) destiné à maintenir le contenant (8) selon un agencement suspendu, ainsi qu'un dispositif de pesée (9) destiné à peser le contenant (8) suspendu,
**caractérisé en ce qu'**au moins une partie du dispositif de pesée (9) est agencée verticalement au-dessus de l'ouverture de distribution (4a).

2. Dispositif de remplissage selon la revendication 1, **caractérisé en ce que** le support de maintien (7) est relié au dispositif de pesée (9) par l'intermédiaire d'un organe porteur (10) s'étendant sensiblement de manière verticale.

3. Dispositif de remplissage selon l'une des revendications 1 ou 2, **caractérisé en ce que** le dispositif de pesée (9) est agencé sur deux côtés opposés et de manière symétrique par rapport à l'axe de remplissage (4').

4. Dispositif de remplissage selon la revendication 2 ou la revendication 3, **caractérisé en ce que** l'organe porteur (10) traverse une pièce de cadre (2a, 3).

5. Dispositif de remplissage selon la revendication 4, **caractérisé en ce que** la traversée (11a, 11b) de l'organe porteur (10) est rendue étanche sur un et/ou deux côtés.

6. Dispositif de remplissage selon l'une des revendications 2 à 5, **caractérisé en ce que** l'organe porteur (10) est monté sans frottement, notamment par l'intermédiaire d'un palier magnétique.

7. Dispositif de remplissage selon l'une des revendications 2 à 6, **caractérisé en ce que** l'organe porteur (10) définit un espace dégagé pour l'ouverture de distribution (4a) et sa conduite d'alimentation (5).

8. Dispositif de remplissage selon la revendication 7, **caractérisé en ce que** l'ouverture de distribution (4a) et la conduite d'alimentation (5) sont agencées entre deux bras opposés (10a, 10b) de l'organe porteur (10).

9. Dispositif de remplissage selon l'une des revendications 1 à 8, **caractérisé en ce qu'**une conduite d'alimentation (5) pour l'ouverture de distribution (4a) est menée et guidée à travers une partie de cadre (3, 30).

10. Dispositif de remplissage selon l'une des revendications 1 à 9, **caractérisé en ce que** l'ouverture de distribution (4a) peut être fermée.
